# EUROPÄISCHE PATENTSCHRIFT

(11) **EP 2 003 561 B1**
(45) Veröffentlichungstag und Bekanntmachung des Hinweises auf die Patenterteilung: **26.12.2018**
(21) Anmeldenummer: 08009602.7
(22) Anmeldetag: 27.05.2008
(51) Int. Cl.: H04B 1/40, G06F 11/36

(54) **Funkgerät, System und Verfahren für Test und/oder Diagnose**
Radio device, method and system for testing and/or diagnosis
Appareil radio, système et procédé pour le test et/ou le diagnostic

(30) Priorität: 12.06.2007 DE 102007026940; 04.10.2007 DE 102007047487
(43) Veröffentlichungstag der Anmeldung: 17.12.2008
(73) Patentinhaber: Rohde & Schwarz GmbH & Co. KG, 81671 München (DE)
(72) Erfinder: Ebersberger, Michael, 82140 Olching (DE); Gettert, Wolfram, 82256 Fürstenfeldbruck (DE)
(74) Vertreter: Körfer, Thomas

(56) Entgegenhaltungen:
- WO-A2-2005/050357
- US-A- 4 617 663
- US-A1- 2004 242 261
- MITOLA J: "SDR architecture refinement for JTRS", MILCOM 2000. 21ST CENTURY MILITARY COMMUNICATIONS CONFERENCE PROCEEDIN GS 22-25 OCTOBER 2000, PISCATAWAY, NJ, USA,IEEE, Bd. 1, 22. Oktober 2000 (2000-10-22), Seiten 214-218, XP010532587, ISBN: 978-0-7803-6521-6
- CHAMBERLAIN M W: "A Software Defined by Radio", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17. Oktober 2005 (2005-10-17), Seiten 1-6, XP010901534, DOI: 10.1109/MILCOM.2005.1606035 ISBN: 978-0-7803-9393-6

## Beschreibung

Die Erfindung bezieht sich auf ein programmierbares Funkgerät in Verbindung mit einem System und einem Verfahren zu Test- und/oder Diagnosezwecken innerhalb des programmierbaren Funkgeräts.

Programmierbare Funkgeräte bzw. Funkgeräte auf Softwarebasis (SDR, Software defined radio) stellen mit der dritten Generation den aktuellsten Entwicklungsstand von Funkgeräten dar. In diesen Funkgeräten sind definitionsgemäß alle wesentlichen Aufgaben mittels Software realisiert, die auf einer Hardware-Einheit bzw. einem Transceiver (Sende-Empfänger), der DSPs, FPGA und/oder GPPs enthält, implementiert ist.

Die in programmierbaren Funkgeräten realisierten Funktionalitäten sind unter anderem Kalibrierung und Überwachung, sowie Bereitstellung der Bedienoberflächen und der Fernsteuerung für das Funkgerät.

Neben diesen nach außen hin sichtbaren Aufgaben sind in den Funkgeräten auf Softwarebasis noch weitere Funktionalitäten implementiert, welche der internen Organisation und der Ablaufsteuerung dienen. Insbesondere weist die Software der programmierbaren Funkgeräte der dritten Generation aufgrund von international harmonisierten Architekturen gemäß dem SCA (Software Communications Architecture)-Standard eine verbesserte Portabilität auf.

Das Dokument Mitola J: "SDR Architecture Refinement for JTRS", Milcom 2000 Bd1, 22. Oktober (2000-10-22), Seiten 214-218, lehrt ein programmierbares modulares Kommunikationssystem (Software Defined Radio, SDR). Nicht gezeigt wird in dieser Druckschrift, dass ein von einer ersten Funktionseinheit ausgehender Zugriff auf ausführbare Kommandos einer zweiten Funktionseinheit erfolgt, sowie eine Rückmeldung über einen Status des erfolgten Zugriffs vorgesehen ist, welcher von der Barrierefunktion autorisiert ist.

Die WO 2005/050357 A2 lehrt nur einen Bypass zwischen dem verschlüsselten (schwarzen) Bereich und dem unverschlüsselten (roten) Bereich eines SDR-Radios.

In der WO 2005/065098 A2 ist ein Verfahren und eine Vorrichtung beschrieben, welches bzw. welche eine ladbare Wellenform-Applikation gemäß des SCA-Standards (SCA, software communication architecture) für ein programmierbares Funkgerät (i.e. ein Funkgerät auf Softwarebasis; bzw. SDR, software defined radio) erstellt. Dabei ist ein Code-Generator für eine Umgebung bezüglich der zu erstellenden Wellenform-Applikation vorgesehen. Dieser Code-Generator dient dazu, die Implementierung von Modulen der administrativen Funkgerät-Software von der Implementierung der ladbaren Wellenform-Applikation zu trennen. Dafür ist eine zusätzliche Abstraktionsebene definiert, welche in die Instanzen der administrativen Module eingegliedert ist, wobei jeweils eine Instanz das Zusammenwirken über Schnittstellen zwischen den Abstraktionsebenen einer SCA-konformen Umgebung und einer Wellenform-Applikation regelt. Diese zusätzliche Abstraktionsebene gewährleistet, dass die Schnittstellen zwischen jeweils einer Wellenform-Applikation und den technischen Abstraktionsebenen nur mit Quellcode zusammenwirken, welcher mit der SCA-Architektur konform ist. Der Quellcode, welcher aus Schablonen generiert wurde, gewährleistet für die erzeugte Wellenform-Applikation bzw. Wellenformfunktion Portabilität im Hinblick auf andere SCA-konforme Plattformen bzw. Umgebungen.

Von Nachteil an diesem Verfahren bzw. an dieser Vorrichtung ist, dass nicht SCA-konformer Code nicht verwendet werden kann.

Der Erfindung liegt die Aufgabe zu Grunde, ein Funkgerät bzw. ein System und ein darauf anwendbares Verfahren anzugeben, welches ein Test bzw. ein Diagnosewerkzeug umfasst, womit SCA-Konformität einer für das Funkgerät zu entwickelnden Software ermöglicht wird.

Bezüglich des Funkgeräts wird die genannte Aufgabe erfindungsgemäß gelöst durch die Merkmale des Anspruchs 1. Im Hinblick auf das System bzw. das Verfahren ergibt sich eine erfindungsgemäße Lösung aus den Merkmalen der nebengeordneten Ansprüche 6 bzw. 12. Vorteilhafte Weiterbildungen des erfindungsgemäßen Funkgeräts sind Gegenstand der auf Anspruch 1 rückbezogen Unteransprüche 2 bis 5. Die vorteilhaften Weiterbildungen des in den nebengeordneten Ansprüchen 6 bzw. 12 beanspruchten Systems zum Starten von Kommandos bzw. des Verfahrens zum Austausch von beliebigen Kommandos sind Gegenstand der rückbezogenen Ansprüche 7 bis 11 bzw. 13 bis 16.

So umfasst das erfindungsgemäße programmierbare Funkgerät (SDR , Software Defined Radio) einen Transceiver (Sende-Empfänger) und zumindest eine Wellenform, die auf einen Transceiver geladen wird. Das erfindungsgemäße Funkgerät verfügt über mehrere Funktionseinheiten, welche über geeignete Schnittstellen adressierbar sind und welche mittels einer Barrierefunktion getrennt sind. Die Schnittstellen dienen auch zu Testzwecken und/oder Diagnosezwecken der in mehrere operative Schichten gegliederten Funktionseinheiten, wobei ein von einer ersten Funktionseinheit ausgehender Zugriff auf ausführbare Kommandos einer zweiten Funktionseinheit, sowie eine Rückmeldung über einen Status des erfolgten Zugriffs vorgesehen ist. Dieser Zugriff ist von der Barrierefunktion autorisiert.

Dabei ist es von Vorteil, dass mit der Schnittstelle innerhalb des erfindungsgemäßen Funkgeräts für den Entwicklungsingenieur ein Instrument zur Erzeugung von definierten Zuständen innerhalb der Wellenformfunktionalität bereitgestellt ist, was auch ein Monitoring ermöglicht. Somit ist eine einfache Nachbildung von im Standard geforderten Testszenarios möglich. Des weiteren erlaubt es die Schnittstelle innerhalb des erfindungsgemäßen Funkgeräts, dass Funktionen in der verschlüsselten Funktionseinheit von außerhalb gestartet werden können und nicht vom Sicherheitsmechanismus abgeblockt werden.

Zudem ist es vorteilhaft, dass die Schnittstellen innerhalb des erfindungsgemäßen Funkgeräts eine Kompatibilität mit dem SCA (Software Communication Architecture) Standard aufweisen. Damit ist es einfach, sicherzustellen, dass die für das Funkgerät zu entwickelnde Software mit dem SCA-Standard konform ist, da über diese Schnittstellen Funktionen auf den unteren operativen Schichten des erfindungsgemäßen Funkgeräts, welche nicht dem SCA-Standard entsprechen, gezielt aktivierbar sind.

Des weiteren ist es vorteilhaft, dass eine höhere operative Schicht der Funktionseinheiten als eine zu Testzwecken und/oder Diagnosezwecken installierbare und deinstallierbare Applikation des Funkgeräts vorgesehen ist. Dadurch ist es für den Hersteller des erfindungsgemäßen Funkgeräts möglich, diese sicherheitskritische Applikation vor der Aushändigung des erfindungsgemäßen Funkgeräts an den Kunden zu deinstallieren. Der Kunde kann somit nicht mehr gezielt die unteren operativen Schichten der Wellenform-Software für das programmierbare erfindungsgemäße Funkgerät ansprechen. Insbesondere wird dadurch verhindert, dass unverschlüsselte Daten und/oder Steuerbefehle ungehindert die Barrierefunktion passieren und somit für Dritte leicht abhörbar sind.

Die mit dem erfindungsgemäßen Funkgerät erzielten Vorteile bestehen insbesondere auch darin, dass die ausführbaren Kommandos in einem Befehlsvorrat einer unteren operativen Schicht des Funkgeräts enthalten sind. Somit ist sichergestellt, dass bei einem Testverfahren das Betriebssystem des Funkgeräts und die Ansteuerung des Transceivers ausreichend durchgetestet werden können.

Des Weiteren ist es vorteilhaft, dass das erfindungsgemäße Funkgerät an einen Testautomaten angeschlossen werden kann. Dessen Befehle passieren wegen der entsprechenden Schnittstelle ungehindert die Barrierefunktion um auf unverschlüsselte, sicherheitskritische Anwendungen bzw. Kommandos zuzugreifen.

Ferner ist es vorteilhaft, dass die untere operative Schicht des erfindungsgemäßen Funkgeräts einem Betriebssystem zur Administration für Wellenformfunktionalitäten entspricht. Dadurch ist sichergestellt, dass das Installieren bzw. das Deinstallieren aller implementierten Wellenformen ausreichend getestet werden kann, da die internen Zustände des Betriebssystems über die entsprechende Schnittstelle von extern abfragbar sind.

Zudem ist es von Vorteil, dass dieser Zugriff auf das Betriebssystem des erfindungsgemäßen Funkgeräts mittels einer Tunnelverbindung realisiert ist, die die Barrierefunktion ungehindert überschreitet. Daher ist der Aufwand für den Testingenieur gering, da er bei der Implementierung der Testfälle die Barrierefunktion nicht beachten muss. Das bedeutet, dass der Testingenieur davon ausgehen kann, dass das erfindungsgemäße Funkgerät Mittel vorsieht, die die Testfunktionen nicht an sicherheitsbedingten Hürden scheitern lassen.

Außerdem ist eine bidirektionale Tunnelverbindung vorteilhaft für einen Transport der Rückmeldung des Status des bzw. der vom Betriebssystem ausgeführten Kommandos, da diese Rückmeldung ebenfalls nicht von der Barrierefunktion ausgefiltert wird.

Der nebengeordnete Systemanspruch 6 beschreibt ein System zum Starten von Kommandos in einem erfindungsgemäßen Funkgerät mit einem Transceiver und mit zumindest einer auf den Transceiver ladbaren Wellenform (SDR , Software Defined Radio). Vorteilhafterweise ist eine Aktivierung beliebiger Kommandos über geeignete Schnittstellen vorgesehen, wobei das erfindungsgemäße System mehrere über die Schnittstellen adressierbare Funktionseinheiten aufweist. Diese Funktionseinheiten sind mittels einer Barrierefunktion getrennt und in mehrere operative Schichten gegliedert. Die Schnittstellen innerhalb des erfindungsgemäßen Systems sind für Testzwecke und/oder Diagnosezwecke geeignet, wobei ein Zugriff einer ersten Funktionseinheit oder von extern auf beliebige ausführbare Kommandos einer zweiten Funktionseinheit vorgesehen ist. Im Anschluss an diesen von der Barrierefunktion autorisierten Zugriff erfolgt eine Rückmeldung eines Status an die erste Funktionseinheit.

Gemäß vorteilhafter Ausgestaltung des erfindungsgemäßen Systems genügen die Schnittstellen einerseits dem SCA (Software Communication Architecture)-Standard und andererseits einem beliebigen nicht SCA-konformen Standard. Somit ist sichergestellt, dass in einem Zertifizierungsverfahren gezielt der SCA-Standard im Zusammenwirken mit einem beliebigen Standard abgetestet werden kann.

Darüber hinaus ist eine operative Schicht der Funktionseinheiten vorteilhafterweise so konzipiert, dass sie zu Testzwecken und/oder Diagnosezwecken installierbar und bei der Aushändigung des Funkgeräts an den Kunden deinstallierbar ist.

Zweckmäßigerweise ist die erste Funktionseinheit (Rote Einheit) für eine Verarbeitung von unverschlüsselten Daten vorgesehen und die zweite Funktionseinheit (Schwarze Einheit) für eine Verarbeitung von verschlüsselten Daten vorgesehen. Dadurch ist gewährleistet, dass Dritte, insbesondere Kunden keine Kenntnis von unverschlüsselten, sicherheitskritischen Daten bekommen, da der Zugang bzw. der Zugriff auf die zweite Funktionseinheit mittels der Barrierefunktion blockiert ist.

Vorteilhafterweise ist die dritte Funktionseinheit sowohl mit der ersten Funktionseinheit (Rote Einheit) als auch mit der zweiten Funktionseinheit (Schwarze Einheit) verbunden, wobei eine direkte, unkontrollierte Kommunikation zwischen der ersten Funktionseinheit (Rote Einheit) und der zweiten Funktionseinheit (Schwarze Einheit) mittels der Barrierefunktion verhindert ist.

Durch die Barrierefunktion (Bypass-Funktion) ist vorteilhafterweise ein kontrollierter Datenaustausch zwischen der ersten Funktionseinheit (Rote Einheit) und der zweiten Funktionseinheit (Schwarze Einheit) möglich, wobei eine Autorisierung des Datenaustauschs über eine Liste parametrisiert ist. Diese Liste legt vorteilhafterweise eine Richtlinie für den erlaubten Datenaustausch fest und unterbindet einen Nicht-SCA konformen Datenaustausch zwischen den Funktionseinheiten.

Das erfindungsgemäße Verfahren zum Austausch von beliebigen Kommandos zwischen mehreren über eine Barrierefunktion getrennte Funktionseinheiten eines Funkgeräts auf Software-Basis (SDR , Software Defined Radio) umfasst zumindest eine in einem Transceiver erzeugbare Wellenform, welche vorteilhafterweise vom Anwender bei Bedarf geladen wird oder wieder gelöscht wird.

Dabei wird zumindest eine Schnittstelle als Testwerkzeug und/oder als Diagnosewerkzeug eingesetzt, wobei das jeweilige Kommando von einer ersten Funktionseinheit oder von extern ausgeht und auf eine zweite Funktionseinheit zugreift. Im Anschluss an diesen Zugriff wird dessen Status an die erste Funktionseinheit gemeldet, wobei die Barrierefunktion innerhalb einer dritten Funktionseinheit diese Meldung autorisiert.

Vorteilhafterweise weist das erfindungsgemäße Verfahren zumindest eine operative Wellenform und zumindest eine Kommandowellenform auf, welche jeweils von einer Steuereinheit geladen werden.

Die operative Wellenform des erfindungsgemäßen Verfahrens transportiert ausgehend von einem Steuergerät über eine Funktionseinheit ohne Verschlüsselung (Rote Einheit) Steuerdaten über die Barrierefunktion hinweg zu einer Funktionseinheiten mit Verschlüsselung (Schwarze Einheit). Zweckmäßigerweise greift die Kommandowellenform über einen SCA-Adapter mittels des Transports von Steuerdaten auf ein Betriebssystem des Funkgeräts auf Software-Basis zu.

Weiterhin ist von Vorteil, dass eine unveränderliche Software-Plattform des erfindungsgemäßen Funkgeräts über sein Betriebssystem gemäß des erfindungsgemäßen Verfahrens auf eine nicht-SCA konforme Software des Funkgeräts zugreifen kann.

Ausführungsbeispiele der vorliegenden Erfindung werden nachfolgend beschrieben. Sowohl die Struktur als auch die Betriebsweise der Erfindung sowie deren weitere Vorteile und Aufgaben sind am besten anhand der folgenden Beschreibung in Verbindung mit den dazugehörigen Zeichnungen verständlich. In der Zeichnung zeigt:
- Fig. 1: einen schematischen und prinzipiellen Aufbau eines programmierbaren Funkgeräts;
- Fig. 2: einen schematischen Aufbau der Blockstruktur eines erfindungsgemäßen Funkgeräts;
- Fig. 3: ein internes Protokoll der Kommandowellenform als Ausführungsbeispiel des erfindungsgemäßen Verfahrens und
- Fig. 4: eine tabellarische Erläuterung der ausgetauschten Nachrichten des in Fig. 3 dargestellten Protokolls.

Einander entsprechende Teile sind in allen Figuren mit den gleichen Bezugszeichen versehen.

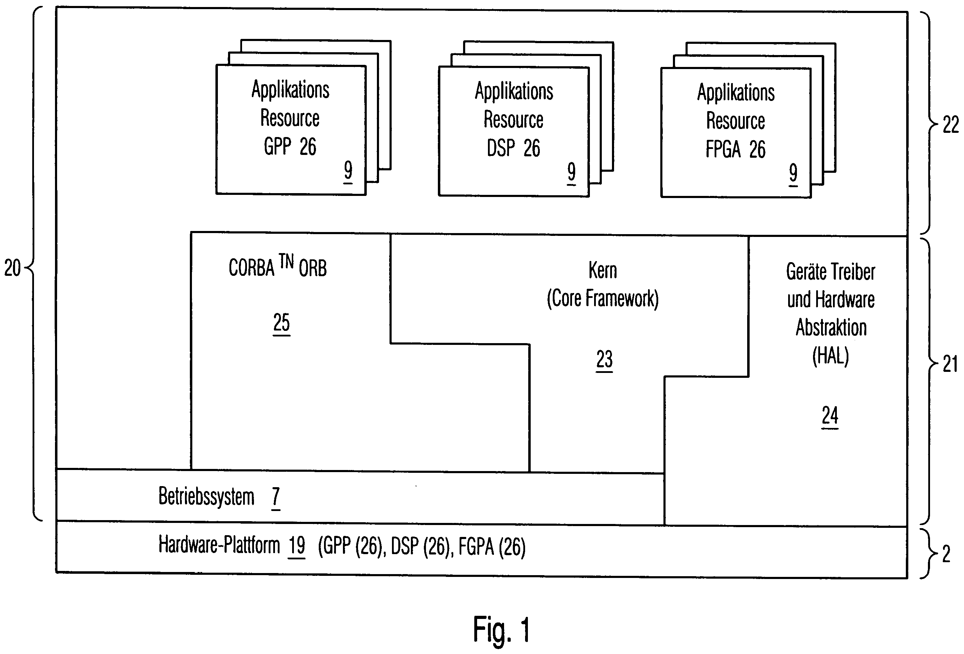

Fig. 1 zeigt einen schematischen und prinzipiellen Aufbau eines programmierbaren Funkgeräts 1. Das programmierbare Funkgerät 1 umfasst eine Hardware-Plattform 19 mit DSPs und/oder GPPs und/oder FPGAs, welche die Funktionalität eines Transceivers (Sende-Empfänger) 2 bilden.

Auf der Hardware-Plattform 19 ist die Software-Ebene 20 aufgebaut, welche sich grob in ein Betriebssystem 7, eine Integrationsschicht 21 und eine Anwendungsschicht 22 unterteilen lässt. Die Integrationsschicht 21 setzt sich aus drei Säulen zusammen, welche eine inneren Säule (Core Framework) 23, eine Abstraktionsäule 24 für Hardware und Treiber und einer CORBA-Säule 25 umfasst.

Die auf der Integrationsschicht 21 aufsetzende Anwendungsschicht 22 umfasst eine oder mehrere Anwendungen 9 bzw. Applikationen, welche jeweils mit einem Hardware-Baustein 26 zusammenwirken. Dadurch ist es möglich, dass Applikationen 9 der Anwendungsschicht 22 mit einem Hardware-Baustein 26 eines anderen Herstellers zusammenwirken.

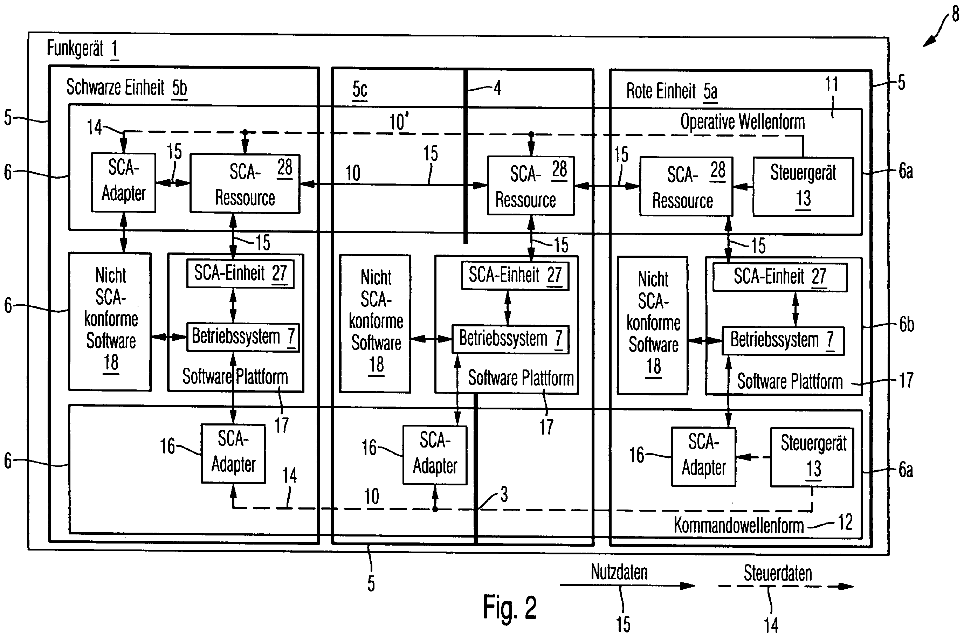

Fig. 2 zeigt einen schematischen Aufbau der Blockstruktur eines erfindungsgemäßen Funkgeräts 1, insbesondere ein programmierbares Funkgerät 1 (SDR , Software Defined Radio) der dritten Generation mit verbesserter Portabilität. Das erfindungsgemäße Funkgerät 1 umfasst einen Transceiver (Sende-Empfänger) 2 und zumindest eine auf den Transceiver 2 ladbare operative Wellenform 11. Ferner weist das erfindungsgemäße Funkgerät 1 mehrere über Schnittstellen 3 adressierbare und über eine Barrierefunktion 4 getrennte Funktionseinheiten 5 bzw. 5a, 5b, 5c auf, wobei die Schnittstellen 3 auch zu Testzwecken und/oder Diagnosezwecken der in mehrere operative Schichten 6 gegliederten Funktionseinheiten 5 vorgesehen sind.

Im erfindungsgemäßen Funkgerät 1 ist ein von einer erster Funktionseinheit 5a (rote Einheit) ausgehender Zugriff auf ausführbare Kommandos einer zweiten Funktionseinheit 5b (schwarze Einheit) vorgesehen, wobei dieser Zugriff auch in der umgekehrten Richtung von der schwarzen Einheit auf die rote Einheit erfolgen kann. Des weiteren ist im erfindungsgemäßen Funkgerät 1 eine Rückmeldung über einen Status des erfolgten Zugriffs vorgesehen, welcher von der Barrierefunktion 4 autorisiert ist.

Die Schnittstellen 3 der oben beschriebenen Funktionseinheiten 5 weisen einerseits eine Kompatibilität mit dem SCA (Software Communication Architecture) Standard auf und sind andererseits mit einem nicht SCA-konformen Standard kompatibel.

Eine operative Schicht 6a der Funktionseinheiten 5 ist als eine zu Testzwecken und/oder Diagnosezwecken installierbare und deinstallierbare Applikation 9 des erfindungsgemäßen Funkgeräts 1 vorgesehen. Diese Applikation 9 ist notwendig, um die Barrierefunktion 4 zwischen den Funktionseinheiten 5 während einer Testsession ungehindert passieren zu können. Vorzugsweise ist diese Applikation 9 vor der Auslieferung an den Kunden einfach wieder zu entfernen, so dass keine Sicherheitslücken im erfindungsgemäßen Funkgerät 1 entstehen können.

Die über die oben beschriebene Applikation 9 ausführbaren Kommandos sind in einem Befehlsvorrat einer unteren operativen Schicht 6b des erfindungsgemäßen Funkgeräts 1 enthalten, wobei die untere operative Schicht 6b des erfindungsgemäßen Funkgeräts 1 einem Betriebssystem 7 und einem Kern (core Framework) 23 zur Administration von Wellenformfunktionalitäten oder einer Ansteuerung für den Transceiver 2 entspricht. Die Administration von Wellenformfunktionalitäten umfasst beispielsweise einen Mechanismus zum Laden bzw. zum Entfernen von bestimmten Wellenformen.

Ein Zugriff auf das Betriebssystem 7 des erfindungsgemäßen Funkgeräts 7 ist mittels einer Tunnelverbindung 10' realisiert, die die Barrierefunktion 4 zwischen einer Funktionseinheit 5a mit unverschlüsselten Daten (rote Einheit) und einer Funktionseinheit 5b mit verschlüsselten Daten (schwarze Einheit) überschreitet. Dabei ist die Tunnelverbindung 10' ebenfalls für einen Transport der Rückmeldung des Status des bzw. der vom Betriebssystem 7 ausgeführten Kommandos vorgesehen.

Das erfindungsgemäße System 8 zum Starten von Kommandos bezieht sich auf das oben beschriebene Funkgerät 1 mit einem Transceiver 2 und mit zumindest einer im Transceiver 2 erzeugbaren bzw. in den Transceiver 2 ladbaren operativen Wellenform 11. Im erfindungsgemäßen System 8 ist eine Aktivierung der Kommandos über Schnittstellen 3 vorgesehen, wobei das System 8 mehrere über die Schnittstellen 3 adressierbare Funktionseinheiten 5 bzw. 5a, 5b, 5c aufweist, die mittels einer Barrierefunktion 4 getrennt sind und die in mehrere operative Schichten 6 bzw. 6a, 6b gegliedert sind. Die Schnittstellen 3 dienen zu Testzwecken und/oder Diagnosezwecken, wobei ein Zugriff einer ersten Funktionseinheit 5 auf beliebige ausführbare Kommandos einer zweiten Funktionseinheit 5 (oder umgekehrt) vorgesehen ist und im Anschluss daran eine Rückmeldung eines Status des Zugriffs, der von der Barrierefunktion 4 autorisiert ist, an die erste Funktionseinheit 5 erfolgt, wobei die Schnittstellen 3 einerseits den SCA (Software Communication Architecture) Standard und andererseits einen beliebigen nicht SCA-konformen Standard erfüllen.

Eine operative Schicht 6a innerhalb der Funktionseinheiten 5 ist als eine zu Testzwecken und/oder Diagnosezwecken installierbare und deinstallierbare Applikation 9 vorgesehen.

Das gesamte erfindungsgemäße System 8 weist zumindest eine erste Funktionseinheit 5, eine zweite Funktionseinheit 5 und eine dritte Funktionseinheit 5 auf, wobei die erste Funktionseinheit 5a für eine Verarbeitung von unverschlüsselten Daten (rote Einheit), und die zweite Funktionseinheit 5b für eine Verarbeitung von verschlüsselten Daten (schwarze Einheit) vorgesehen ist. Die dritte Funktionseinheit 5c ist sowohl mit der ersten Funktionseinheit 5 als auch mit der zweiten Funktionseinheit 5 verbunden und dient zur Unterbindung einer direkten Kommunikation zwischen der ersten Funktionseinheit 5a und der zweiten Funktionseinheit 5b.

Die Barrierefunktion 4 zwischen der ersten Funktionseinheit 5a und der zweiten Funktionseinheit 5b autorisiert einen Datenaustausch zwischen diesen Funktionseinheiten 5, wobei die Autorisierung des Datenaustauschs über eine Liste parametrisiert ist, die eine Richtlinie für einen erlaubten Datenaustausch vorgibt. Diese Richtlinie unterbindet einen Nicht-SCA konformen Datenaustausch zwischen den beiden Funktionseinheiten 5a,5b.

Das erfindungsgemäße Verfahren zum Austausch von beliebigen Kommandos zwischen mehreren über eine Barrierefunktion 4 getrennte Funktionseinheiten 5 eines Funkgeräts 1 auf Software-Basis (SDR , Software Defined Radio) mit zumindest einer ladbaren operativen Wellenform 11 geht von zumindest einer Schnittstelle als Testwerkzeug und/oder als Diagnosewerkzeug aus. Das jeweilige auszuführende Kommando entspringt einer ersten Funktionseinheit 5 und greift auf eine zweite Funktionseinheit zu. Im Anschluss an diesen Zugriff wird dessen Status an die erste Funktionseinheit 5 gemeldet, wobei die Barrierefunktion 4 innerhalb einer dritten Funktionseinheit 5 diese Meldung autorisiert.

Das erfindungsgemäße Verfahren lädt im Funkgerät 1 zumindest eine operative Wellenform 11 und zumindest eine Kommandowellenform 12, wobei die operative Wellenform 11 ausgehend von einem Steuergerät 13 einer Funktionseinheit 5 ohne Verschlüsselung (rote Einheit) bzw. ggf. auch von außerhalb Steuerdaten 14 über die Barrierefunktion 4 hinweg zu Funktionseinheiten 5b mit Verschlüsselung (schwarze Einheit) transportiert. Nutzdaten 15 werden in zwei Richtungen parallel zu den Steuerdaten 14 transportiert, wobei diese Nutzdaten 15 in der darunterliegenden operativen Schicht 6b generiert werden und über eine SCA-Einheit 27 an die darüberliegende operative Schicht 6a in die Funktionseinheit 5a bzw. 5b weitergereicht werden. Bevor die Nutzdaten 15 die Barrierefunktion 4 überschreiten, wird überprüft, ob diese Daten die Barrierefunktion 4 passieren dürfen. Dies gilt auch für die Steuerdaten. Zur Verschlüsselung dient die SCA - Ressource 28.

Die zumindest eine Kommandowellenform 12 greift über einen SCA-Adapter 16 mittels des Transports von Steuerdaten 14 auf ein Betriebssystem 7 des Funkgeräts 1 auf Software-Basis zu. Eine unveränderliche Software-Plattform 17 des Funkgeräts 1 greift über sein Betriebssystem 7 auf eine nicht-SCA konforme Software 18 des erfindungsgemäßen Funkgeräts 1 zu.

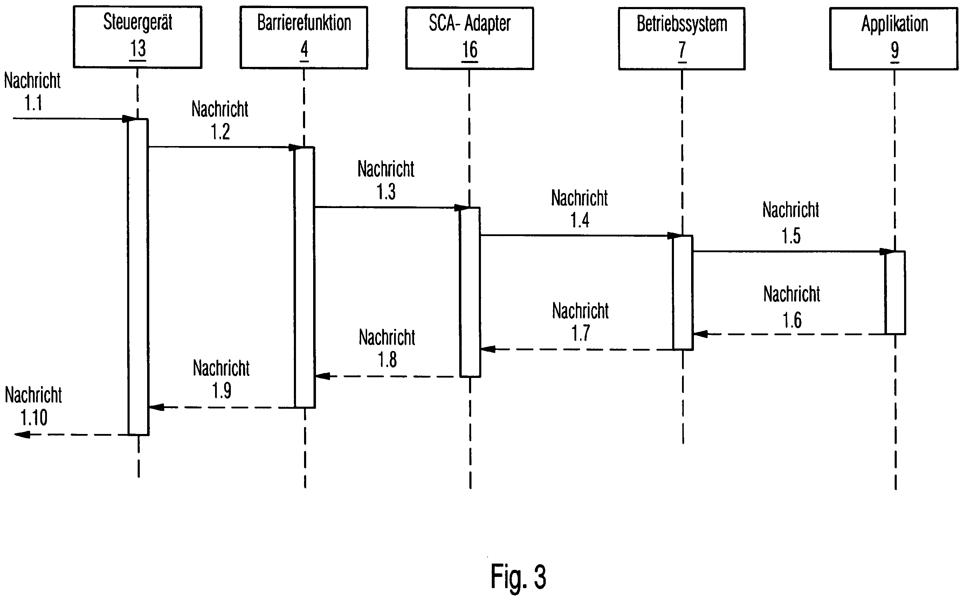

Fig. 3 zeigt ein internes Protokoll der Kommandowellenform 12 als Ausführungsbeispiel des erfindungsgemäßen Verfahrens. Das Ausführungsbeispiel zeigt den Ablauf des synchronen Kommandos "Applikation 3,4 > result.txt", wobei "3,4" die Aktualparameter dieser Kommandowellenform 12 sind, mit welchen die Anwendung bzw. das Kommando "Applikation" auf Betriebssystemebene aufgerufen wird.

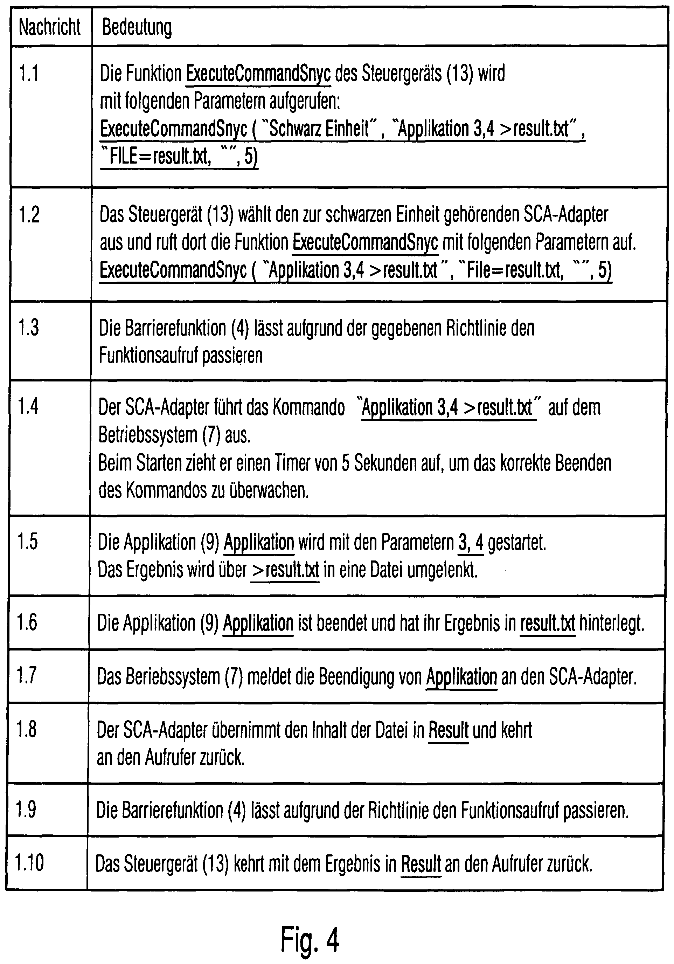

Zum besseren Verständnis des in Fig. 3 beschriebenen internen Protokolls zeigt Fig. 4 eine tabellarische Erläuterung der ausgetauschten Nachrichten. Die Nachricht 1.1, welche von dem Steuergerät 13 ausgeht, transportiert die Funktion "ExecuteCommandSync" die wiederum das Kommando "Applikation" als Aktualparameter 9 enthält. Das Steuergerät 13 (Assembly Controller) wählt mittels der Nachricht 1.2 den zur schwarzen Einheit 5b gehörenden SCA-Adapter 16 aus und ruft dort die Funktion "ExecuteCommandSnyc" mit folgenden Parametern auf: "ExecuteCommandSnyc("Applikation 3,4 >result.txt", "File=result.txt, "", 5)"

Die Barrierefunktion 4 lässt aufgrund der gegebenen Richtlinie den Funktionsaufruf passieren (Nachricht 1.3). Der ausgewählte SCA-Adapter 16 führt das Kommando "Applikation 3,4 > result.txt" auf dem Betriebssystem 7 innerhalb der schwarzen Einheit 5b aus. Beim Starten dieses Kommandos zieht der SCA-Adapter 16 mittels der Nachricht 1.4 einen Timer von 5 Sekunden auf, um das korrekte Beenden des gestarteten Kommandos zu überwachen. Anschließend wird über die Nachricht 1.5 das Kommando "Applikation" mit den beiden Aktualparametern "3,4" im Betriebssystem 7, welches der Schwarzen Einheit 5b zugeordnet ist, gestartet.

Das Ergebnis dieses Kommandos wird über den Befehl "> result.txt" in die Datei result.txt geschrieben. Das Kommando "Applikation" ist beendet und hat ihr Ergebnis in der Datei result.txt hinterlegt. Dies wird über die Nachricht 1.6 an das Betriebssystem 7, der Schwarzen Einheit 5b gemeldet. Anschließend wird über die Nachricht 1.7 die Beendigung des Kommandos "Applikation" vom Betriebssystem 7 an den SCA-Adapter 16 gemeldet. Der SCA-Adapter 16 übernimmt den Inhalt der Datei in die Statusmeldung "RESULT" und kehrt über die Nachricht 1.8 an den Aufrufer zurück.

Nachricht 1.9 bezieht sich darauf, dass die Barrierefunktion 4 aufgrund der Richtlinie den Funktionsaufruf passieren lässt. Mit der Nachricht 1.10 kehrt das Steuergerät 13 mit dem Ergebnis in der Statusmeldung "RESULT" an den Aufrufer zurück.

Die Erfindung ist nicht auf das in der Zeichnung dargestellte Ausführungsbeispiel beschränkt, sondern kann auch in anderen elektronischen Geräte mit einer Hardware-Plattform und einer darauf aufgebauten Software-Plattform angewendet werden. Insbesondere ist die Erfindung auch auf Funkeinrichtungen des kommerziellen Mobilfunks gemäß dem GSM-Standard oder gemäß dem UMTS-Standard anwendbar. Alle vorstehend beschriebenen und in der Zeichnung dargestellten Merkmale sind beliebig miteinander kombinierbar.

## Patentansprüche

1. Funkgerät (1) mit einem Sende-Empfänger (2) mit verschiedenen Wellenformen,
wobei das Funkgerät (1) mehrere über Schnittstellen (3) adressierbare und über eine Barrierefunktion (4) getrennte Funktionseinheiten (5) aufweist,
wobei die Barrierefunktion (4) sich zwischen den Funktionseinheiten (5) befindet,
wobei eine erste Funktionseinheit (5) zur Verarbeitung von unverschlüsselten Daten vorgesehen ist, und eine zweite Funktionseinheit (5) für eine Verarbeitung von verschlüsselten Daten vorgesehen ist, und
wobei die Schnittstellen (3) zu Testzwecken und/oder Diagnosezwecken der in mehrere operative Schichten (6) gegliederten Funktionseinheiten (5) vorgesehen sind,
**dadurch gekennzeichnet,**
**dass** die Schnittstellen (3) eine Kompatibilität mit dem SCA, Software Communication Architecture, Standard aufweisen,
**dass** ein von der ersten Funktionseinheit (5) ausgehender Zugriff auf ausführbare Kommandos der zweiten Funktionseinheit (5) sowie eine Rückmeldung über einen Status des erfolgten Zugriffs vorgesehen ist, welcher von der Barrierefunktion (4) autorisiert ist,
und **dass** innerhalb der zweiten Funktionseinheit (5) des Funkgeräts (1) ein Zugriff auf das Betriebssystem (7) zu Testzwecken mittels einer Tunnelverbindung (10), die die Barrierefunktion (4) ungehindert überschreitet, durch eine operative Schicht (6a) der Funktionseinheiten (5), die als eine zu Testzwecken und/oder Diagnosezwecken installierbare und deinstallierbare Applikation (9) des Funkgeräts (1) vorgesehen ist, realisiert ist.

2. Funkgerät nach Anspruch 1,
**dadurch gekennzeichnet,**
**dass** die Schnittstellen (3) mit einem nicht SCA-konformen Standard ebenfalls kompatibel sind.

3. Funkgerät nach Anspruch 1 oder 2,
**dadurch gekennzeichnet,**
**dass** die ausführbaren Kommandos in einem Befehlsvorrat einer unteren operativen Schicht (6) des Funkgeräts (1) enthalten sind.

4. Funkgerät nach Anspruch 3,
**dadurch gekennzeichnet,**
**dass** die untere operative Schicht (6) des Funkgeräts (1) dem Betriebssystem (7) und/oder einem Kern (13) zur Administration für Wellenform-Funktionalitäten oder einer Ansteuerung für den Sende-Empfänger (2) entspricht.

5. Funkgerät nach einem der Ansprüche 1 bis 4,
**dadurch gekennzeichnet,**
**dass** die Tunnelverbindung (10) für einen Transport der Rückmeldung des Status des bzw. der vom Betriebssystem (7) ausgeführten Kommandos vorgesehen ist.

6. System (8) zum Starten von Kommandos in einem
Funkgerät (1) nach einem der Ansprüche 1 bis 5
wobei eine Aktivierung der Kommandos über
Schnittstellen (3) vorgesehen ist.

7. System nach Anspruch 6,
**dadurch gekennzeichnet,**
**dass** neben der ersten und zweiten Funktionseinheit eine dritte Funktionseinheit vorgesehen ist.

8. System nach Anspruch 7,
**dadurch gekennzeichnet,**
**dass** die dritte Funktionseinheit sowohl mit der ersten Funktionseinheit als auch mit der zweiten Funktionseinheit verbunden ist und zur Unterbindung einer direkten Kommunikation zwischen der ersten Funktionseinheit und der zweiten Funktionseinheit dient.

9. System nach Anspruch 7,
**dadurch gekennzeichnet,**
**dass** die Barrierefunktion (4) einen Datenaustausch zwischen der ersten Funktionseinheit und der zweiten Funktionseinheit autorisiert.

10. System nach Anspruch 7,
**dadurch gekennzeichnet,**
**dass** eine Autorisierung des Datenaustauschs über eine Liste parametrisiert ist, wobei die Liste eine Richtlinie für einen erlaubten Datenaustausch vorgibt.

11. System nach Anspruch 10,
**dadurch gekennzeichnet,**
**dass** die Richtlinie einen Nicht-SCA konformen Datenaustausch zwischen den Funktionseinheiten (5) unterbindet.

12. Verfahren zum Austausch von beliebigen Kommandos zwischen mehreren über eine Barrierefunktion (4) getrennte Funktionseinheiten (5) eines Funkgeräts (1) mit zumindest einer Wellenform,
wobei die Barrierefunktion (4) sich zwischen den Funktionseinheiten (5) befindet,
wobei eine erste Funktionseinheit (5) zur Verarbeitung von unverschlüsselten Daten vorgesehen ist, und eine zweite Funktionseinheit (5) für eine Verarbeitung von verschlüsselten Daten vorgesehen ist, und
wobei zumindest eine Schnittstelle (3) als Testwerkzeug und/oder als Diagnosewerkzeug eingesetzt wird und das jeweilige Kommando von der ersten Funktionseinheit (5) ausgeht, auf die zweite Funktionseinheit (5) zugreift und im Anschluss an diesen Zugriff dessen Status an die erste Funktionseinheit (5) gemeldet wird, wobei die Barrierefunktion (4) innerhalb einer dritten Funktionseinheit (4) diese Meldung autorisiert,
**dadurch gekennzeichnet,**
**dass** die Schnittstellen (3) eine Kompatibilität mit dem SCA, Software Communication Architecture, Standard aufweisen, und
**dass** ein Zugriff auf ein Betriebssystem (7) innerhalb der zweiten Funktionseinheit (5) des Funkgeräts (1) zu Testzwecken mittels einer Tunnelverbindung (10), die die Barrierefunktion (4) ungehindert überschreitet, durch eine operative Schicht (6a) der Funktionseinheiten (5), die als eine zu Testzwecken und/oder Diagnosezwecken installierbare und deinstallierbare Applikation (9) des Funkgeräts (1) vorgesehen ist, realisiert ist.

13. Verfahren nach Anspruch 12,
**dadurch gekennzeichnet,**
**dass** zumindest eine operative Wellenform (11) und zumindest eine Kommandowellenform (12) geladen werden.

14. Verfahren nach Anspruch 13,
**dadurch gekennzeichnet,**
**dass** die operative Wellenform (11) ausgehend von einem Steuergerät (13) innerhalb einer Funktionseinheit (5) ohne Verschlüsselung Steuerdaten (14) über die
Barrierefunktion (4) hinweg zu Funktionseinheiten (5) mit Verschlüsselung transportiert.

15. Verfahren nach Anspruch 13,
**dadurch gekennzeichnet,**
**dass** die zumindest eine Kommandowellenform (12) über einen SCA-Adapter (16) mittels des Transports von Steuerdaten (14) auf ein Betriebssystem (7) des Funkgeräts (1) zugreift.

16. Verfahren nach Anspruch 15,
**dadurch gekennzeichnet,**
**dass** eine Software-Plattform (17) des Funkgeräts (1) über sein Betriebssystem (7) auf eine nicht-SCA konforme Software (18) des Funkgeräts (1) zugreift.

## Claims

1. Radio device (1) with a transceiver (2) with different waveforms,
wherein the radio device (1) comprises a plurality of function units (5) which are addressable by means of interfaces (3) and separated by means of a barrier function (4),
wherein the barrier function (4) is located between the function units (5),
wherein a first function unit (5) is provided for processing of unencrypted data, and a second function unit (5) is provided for processing of encrypted data, and
wherein the interfaces (3) are provided for the purposes of testing and/or the purposes of diagnostics of the function units (5) arranged in a plurality of operative levels (6),
**characterised in that**
the interfaces (3) have a compatibility with the SCA (Software Communication Architecture) standard,
**in that** from the first function unit (5) access is provided to executable commands of the second function unit (5) and feedback regarding a status of the effected access which is authorised by the barrier function (4), and **in that** within the second function unit (5) of the radio device (1) access is provided to the operating system (7) for the purposes of testing by means of a tunnel connection (10) which bypasses the barrier function(4) unhindered, through an operative level (6a) of the function units (5) which is provided as an application (9) of the radio device (1) which can be installed and uninstalled for the purposes of testing and/or the purposes of diagnostics.

2. Radio device according to claim 1,
**characterised in that**
the interfaces (3) are also compatible with a non SCA-compliant standard.

3. Radio device according to claim 1 or 2,
**characterised in that**
the executable commands are contained in a command store of a lower operative level (6) of the radio device (1).

4. Radio device to claim 3,
**characterised in that**
the lower operative level (6) of the radio device (1) corresponds to the operating system (7) and/or to a core (13) for administration for waveform functionalities or actuation for the transceiver (2).

5. Radio device according to one of claims 1 to 4,
**characterised in that**
the tunnel connection (10) is provided for transport of the feedback regarding the status of the command or commands executed by the operating system (7).

6. System (8) for starting of commands in a radio
device (1) according to one of claims 1 to 5,
wherein activation of the commands is provided by means of interfaces (3).

7. System according to claim 6,
**characterised in that**
in addition to the first and second function unit, a third function unit is provided.

8. System according to claim 7,
**characterised in that**
the third function unit is connected both with the first function unit and with the second function unit and serves to prevent direct communication between the first function unit and the second function unit.

9. System according to claim 7,
**characterised in that**
the barrier function (4) authorises an exchange of data between the first function unit and the second function unit.

10. System according to claim 7,
**characterised in that**
authorisation of the exchange of data is parameterised by means of a list, wherein the list sets a guideline for a permitted exchange of data.

11. System according to claim 10,
**characterised in that**
the guideline prevents a non SCA-compliant exchange of data between the function units (5).

12. Method for the exchange of random commands between a plurality of function units (5) of a radio device (1) with at least one waveform and in which the function units (5) are separated by means of a barrier function (4),
wherein the barrier function (4) is located between the function units (5),
wherein a first function unit (5) is provided for processing of unencrypted data, and a second function unit (5) is provided for processing of encrypted data, and
wherein at least one interface (3) is used as a testing tool and/or as a diagnostic tool and the respective command comes from the first function unit (5), accesses the second function unit (5) and following this access its status is reported to the first function unit (5), wherein the barrier function (4) inside a third function unit (4) authorises this report,
**characterised in that**
the interfaces (3) have a compatibility with the SCA (Software Communication Architecture) standard, and
**in that** access is provided to an operating system (7) within the second function unit (5) of the radio device (1) for the purposes of testing by means of a tunnel connection (10) which bypasses the barrier function (4) unhindered, through an operative level (6a) of the function units (5) which is provided as an application (9) of the radio device (1) which can be installed and uninstalled for the purposes of testing and/or the purposes of diagnostics.

13. Method according to claim 12,
**characterised in that**
at least one operative waveform (11) and at least one command waveform (12) are loaded.

14. Method according to claim 13,
**characterised in that**
the operative waveform (11) coming from a controller (13) within a function unit (5) without encryption transports control data (14) bypassing the barrier function (4) to function units (5) with encryption.

15. Method according to claim 13,
**characterised in that**
the at least one command waveform (12) accesses an operating system (7) of the radio device (1) via an SCA adapter (16) by means of the transport of control data (14) .

16. Method according to claim 15,
**characterised in that**
a software platform (17) of the radio device (1) accesses a non SCA-compliant software (18) of the radio device (1) via its operating system (7).

## Revendications

1. Appareil radio (1) comprenant un émetteur/récepteur (2) présentant différentes formes d'onde,
dans lequel l'appareil radio (1) comprend plusieurs unités fonctionnelles (5) adressables par l'intermédiaire d'interfaces (3) et séparées par une fonction barrière (4),
dans lequel la fonction barrière (4) se situe entre les unités fonctionnelles (5),
dans lequel une première unité fonctionnelle (5) est destinée à traiter des données non chiffrées, et une deuxième unité fonctionnelle (5) est destinée à traiter des données chiffrées, et
dans lequel les interfaces (3) sont destinées à tester et/ou à diagnostiquer les unités fonctionnelles (5) subdivisées en plusieurs couches opérationnelles (6),
**caractérisé en ce que**,
les interfaces (3) présentent une compatibilité avec le standard SCA, Software Communication Architecture (architecture de communication logicielle),
**en ce qu'**un accès, partant de la première unité fonctionnelle (5), à des commandes exécutables de la deuxième unité fonctionnelle (5) ainsi qu'un retour concernant un statut de l'accès réalisé avec succès, lequel est autorisé par la fonction barrière (4), sont prévus
et **en ce qu'**à l'intérieur de la deuxième unité fonctionnelle (5) de l'appareil radio (1), un accès au système d'exploitation (7) aux fins de test est réalisé au moyen d'une connexion tunnel (10), qui franchit librement la fonction barrière (4), en passant par une couche opérationnelle (6a) des unités fonctionnelles (5), qui est prévue en tant qu'application (9) de l'appareil radio (1), pouvant être installée et désinstallée aux fins d'essai et/ou de diagnostic.

2. Appareil radio selon la revendication 1,
**caractérisé en ce que**,
les interfaces (3) sont également compatibles avec un standard non conforme à la SCA.

3. Appareil radio selon la revendication 1 ou 2,
**caractérisé en ce que**,
les commandes exécutables sont contenues dans une réserve d'instructions d'une couche opérationnelle inférieure (6) de l'appareil radio (1).

4. Appareil radio selon la revendication 3,
**caractérisé en ce que**,
la couche opérationnelle inférieure (6) de l'appareil radio (1) correspond au système d'exploitation (7) et/ou à un coeur (13) aux fins d'administration pour des fonctionnalités de forme d'onde ou de commande pour l'émetteur/récepteur (2).

5. Appareil radio selon l'une quelconque des revendications 1 à 4,
**caractérisé en ce que**,
la connexion tunnel (10) est destinée à un transport du retour du statut de la commande ou des commandes exécutées par le système d'exploitation (7).

6. Système (8) pour le démarrage de commandes dans un appareil radio (1) selon l'une quelconque des revendications 1 à 5, dans lequel une activation des commandes par l'intermédiaire d'interfaces (3) est prévue.

7. Système selon la revendication 6,
**caractérisé en ce que**,
une troisième unité fonctionnelle est prévue en plus de la première et de la deuxième unité fonctionnelle.

8. Système selon la revendication 7,
**caractérisé en ce que**,
la troisième unité fonctionnelle est connectée aussi bien à la première unité fonctionnelle qu'à la deuxième unité fonctionnelle et sert à empêcher une communication directe entre la première unité fonctionnelle et la deuxième unité fonctionnelle.

9. Système selon la revendication 7,
**caractérisé en ce que**,
la fonction barrière (4) autorise un échange de données entre la première unité fonctionnelle et la deuxième unité fonctionnelle.

10. Système selon la revendication 7,
**caractérisé en ce que**,
une autorisation de l'échange de données est paramétrée par l'intermédiaire d'une liste, dans lequel la liste prédéfinit une ligne directrice pour un échange permis de données.

11. Système selon la revendication 10,
**caractérisé en ce que**,
la ligne directrice empêche un échange de données non conforme à la SCA entre les unités fonctionnelles (5).

12. Procédé d'échange de commandes quelconques entre plusieurs unités fonctionnelles (5) d'un appareil radio (1) présentant au moins une forme d'onde, séparées par une fonction barrière (4),
dans lequel la fonction barrière (4) se situe entre les unités fonctionnelles (5),
dans lequel une première unité fonctionnelle (5) est destinée à traiter des données non chiffrées, et une deuxième unité fonctionnelle (5) est destinée à traiter des données chiffrées, et
dans lequel au moins une interface (3) est utilisée comme outil de test et/ou comme outil de diagnostic et la commande respective part de la première unité fonctionnelle (5), à laquelle la deuxième unité fonctionnelle (5) accède et, à la suite de cet accès, le statut de celui-ci est notifié à la première unité fonctionnelle (5), dans lequel la fonction barrière (4) à l'intérieur d'une troisième unité fonctionnelle (5) autorise cette notification,
**caractérisé en ce que**,
les interfaces (3) présentent une compatibilité avec le standard SCA, Software Communication Architecture, et
**en ce qu'**un accès à un système d'exploitation (7) à l'intérieur de la deuxième unité fonctionnelle (5) de l'appareil radio (1) aux fins de test est réalisé au moyen d'une connexion tunnel (10), qui franchit librement la fonction barrière (4), en passant par une couche opérationnelle (6a) des unités fonctionnelles (5), qui est prévue en tant qu'application (9) de l'appareil radio (1), pouvant être installée et désinstallée aux fins d'essai et/ou de diagnostic.

13. Procédé selon la revendication 12,
**caractérisé en ce que**,
au moins une forme d'onde opérationnelle (11) et au moins une forme d'onde de commande (12) sont chargées.

14. Procédé selon la revendication 13,
**caractérisé en ce que**,
la forme d'onde opérationnelle (11) transporte les données de commande (14) d'un appareil de commande (13) à l'intérieur d'une unité fonctionnelle (5) sans chiffrement au-delà de la fonction barrière (4) vers les unités fonctionnelles (5) à chiffrement.

15. Procédé selon la revendication 13,
**caractérisé en ce que**,
la au moins une forme d'onde de commande (12) accède à un système d'exploitation (7) de l'appareil radio (1) par l'intermédiaire d'un adaptateur SCA (16) au moyen du transport de données de commande (14).

16. Procédé selon la revendication 15,
**caractérisé en ce que**,
une plateforme logicielle (17) de l'appareil radio (1) accède à un logiciel (18) non conforme à la SCA de l'appareil radio (1) par l'intermédiaire du système d'exploitation (7) dudit appareil radio.
